# EUROPEAN PATENT SPECIFICATION

(11) **EP 2 644 485 B1**
(45) Date of publication and mention of the grant of the patent: **16.12.2015**
(21) Application number: 12190354.6
(22) Date of filing: 29.10.2012
(51) Int. Cl.: B62J 6/02, B62J 17/02, B60Q 1/00

(54) **Saddle-ride type vehicle**
Sattelfahrzeug
Véhicule de type à selle

(30) Priority: 27.03.2012 JP 2012070635
(43) Date of publication of application: 02.10.2013
(73) Proprietor: Yamaha Hatsudoki Kabushiki Kaisha, Iwata-shi, Shizuoka 438-8501 (JP)
(72) Inventor: Takesako, Wahei, Iwata-shi, Shizuoka 438-8501 (JP)
(74) Representative: Grünecker Patent- und Rechtsanwälte PartG mbB

(56) References cited:
- JP-A- S5 856 977
- US-A1- 2006 193 143

## Description

The present invention relates to a saddle-ride type vehicle according to the preamble of independent claim 1. Such a saddle-ride type vehicle can be taken from the prior art document US 2006/0193143 A1**.**

Saddle-ride type vehicles such as motorcycles are provided with a head light unit. In recent years, it has been demanded to install a large head light unit in saddle-ride type vehicles for enhancing design, visibility and etc. To install a large head light unit in saddle-ride type vehicles, the head light unit is preferably disposed in a front cover not in a handle cover as with a motorcycle disclosed in Japan Laid-open Patent Application Publication No. JP-A-2007-245866. Especially, in the motorcycle disclosed in Japan Laid-open Patent Application Publication No. JP-A-2007-245866, the lower portion of the front cover is positioned further forwards than the upper portion of the front cover. The front cover having such a shape has a large space in the inside of the lower portion thereof rather than in the inside of the upper portion thereof. Therefore, the head light unit is preferably disposed in the lower portion of the front cover for increasing the size of the head light unit.

However, the head light unit is liable to be easily exposed to rain water when the size thereof is increased. Further, it is also concerned that the head light unit is liable to be exposed to mud and water splashed from below when the head light unit is disposed in the lower portion of the front cover as described above.

It is an object of the present invention to provide a saddle-ride type vehicle whereby attachment of mud and water to a head light unit can be inhibited. According to the present invention said object is solved by a saddle-ride type vehicle having the features of independent claim 1. Preferred embodiments are laid down in the dependent claims.

A saddle-ride type vehicle according to a first aspect includes a head pipe portion, a front cover portion and a head light unit. The front cover portion is disposed in front of the head pipe portion.

The front cover portion is formed for positioning a lower portion thereof further forward than an upper portion thereof. The head light unit is disposed in a lower portion of the front cover portion. The head light unit includes a first light source portion, a first reflector portion and a lens member including a first lens portion, a second lens portion and a third lens portion. The first reflector portion is adapted for forwardly reflecting light from the first light source portion. The first lens portion is disposed in front of the first reflector portion. The second lens portion is continued to the first lens portion on the left side of the first lens portion. The second lens portion is disposed for extending to a position located rearwards of at least a portion of the first reflector portion. The third lens portion is continued to the first lens portion on the right side of the first lens portion. The third lens portion is disposed for extending to a position located rearwards of at least a portion of the first reflector portion. The front cover portion includes an opening portion formed for exposing the lens member of the head light unit therethrough. The front cover portion includes a cover upper edge portion and a cover lower edge portion. The cover upper edge portion is disposed over the first lens portion, the second lens portion and the third lens portion in a vehicle front view. The cover lower edge portion is disposed under the first lens portion, the second lens portion and the third lens portion in the vehicle front view. The cover upper edge portion and the cover lower edge portion form the opening portion. The cover upper edge portion includes an upper protruding section protruded further forwards than the first lens portion. The cover lower edge portion includes a lower protruding section protruded further forwards than the first lens portion.

A saddle-ride type vehicle according to a second aspect relates to the saddle-ride type vehicle according to the first aspect, and wherein each of the upper protruding section and the lower protruding section includes a shape slanted forwardly downwards.

A saddle-ride type vehicle according to a third aspect relates to the saddle-ride type vehicle according to the first aspect, and wherein the lower protruding section is extended to a position located forwards of the upper protruding section.

A saddle-ride type vehicle according to a fourth aspect relates to the saddle-ride type vehicle according to the first aspect, and wherein the front cover portion further includes a cover front edge portion extended obliquely downwards and rearwards from a front end of the lower protruding section in a side view.

A saddle-ride type vehicle according to a fifth aspect relates to the saddle-ride type vehicle according to the first aspect, and wherein the cover upper edge portion is outwardly protruded from upper edge portions of the first, second and third lens portions.

A saddle-ride type vehicle according to a sixth aspect relates to the saddle-ride type vehicle according to the first aspect, and wherein upper edge portions of the first, second and third lens portions are positioned further inwards in the front cover portion than the cover upper edge portion.

A saddle-ride type vehicle according to a seventh aspect relates to the saddle-ride type vehicle according to the first aspect, and wherein the cover lower edge portion is outwardly protruded from lower edge portions of the first, second and third lens portions.

A saddle-ride type vehicle according to an eighth aspect relates to the saddle-ride type vehicle according to the first aspect, and wherein lower edge portions of the first, second and third lens portions are positioned further inwards in the front cover portion than the cover lower edge portion is.

A saddle-ride type vehicle according to a ninth aspect relates to the saddle-ride type vehicle according to the first aspect, and wherein the cover lower edge portion further includes a left slope surface and a right slope surface. The left slope surface is positioned on the left side of the lower protruding section and is slanted forwardly downwards. The right slope surface is positioned on the right side of the lower protruding section and is slanted forwardly downwards. Each of the left slope surface and the right slope surface includes a recess dented downwards.

A saddle-ride type vehicle according to a tenth aspect relates to the saddle-ride type vehicle according to the first aspect, and wherein the second lens portion is disposed for extending to a position located rearwards of and higher than at least a portion of the first reflector portion. The third lens portion is disposed for extending to a position located rearwards of and higher than at least a portion of the first reflector portion.

A saddle-ride type vehicle according to an eleventh aspect relates to the saddle-ride type vehicle according to the first aspect, and wherein the head light unit include a second light source portion, a second reflector portion, a third light source portion and a third reflector portion. The second light source portion is disposed behind the second lens portion. The second reflector portion is adapted for forwardly reflecting light from the second light source portion. The third light source portion is disposed behind the third lens portion. The third reflector portion is adapted for forwardly reflecting light from the third light source portion.

A saddle-ride type vehicle according to a twelfth aspect relates to the saddle-ride type vehicle according to the eleventh aspect, and wherein the second light source portion and the third light source portion are disposed lower than an upper end of the first lens portion.

A saddle-ride type vehicle according to a thirteenth aspect relates to the saddle-ride type vehicle according to the eleventh aspect, and wherein the second reflector portion includes a left-side reflecting surface disposed on the left side of the second light source portion. The left-side reflecting surface is extended leftwards and rearwards. The third reflector portion includes a right-side reflecting surface disposed on the right side of the third light source portion. The right-side reflecting surface is extended rightwards and rearwards.

A saddle-ride type vehicle according to a fourteenth aspect relates to the saddle-ride type vehicle according to the first aspect, and wherein the lens member including the first lens portion, the second lens portion and the third lens portion is invisible while being hidden behind the front cover portion in a plan view.

A saddle-ride type vehicle according to a fifteenth aspect relates to the saddle-ride type vehicle according to the first aspect, and wherein the cover upper edge portion includes a forwardly convex curved shape in a plan view.

A saddle-ride type vehicle according to a sixteenth aspect relates to the saddle-ride type vehicle according to the first aspect, and wherein the lens member including the first lens portion, the second lens portion and the third lens portion includes a forwardly convex curved shape in a plan view.

### Advantageous Effects of Invention

According to the saddle-ride type vehicle of the first aspect, the upper protruding section prevents the head light unit from being easily splashed with mud and water from the above of the front cover portion. Further, the lower protruding section prevents the head light unit from being easily splashed with mud and water from the below of the front cover portion. On the other hand, it is not easy to completely prevent the head light unit from being splashed with mud and water even when the upper protruding section and the lower protruding section are provided. Contrarily, once the head light unit is splashed with mud and water, the upper protruding section and the lower protruding section prevent such mud and water from flowing out, and thereby, mud and water are easily deposited on the head light unit and its periphery. When a vehicle travels at a high speed under the condition, the mud and water deposited on the head light unit and its periphery may be easily scattered and put on a rider. However, according to the saddle-ride type vehicle of the first aspect, the second lens portion and the third lens portion are disposed for extending to positions rearward of at least a portion of the first reflector portion. Therefore, the mud and etc. attached to the first lens portion backwardly flows along either the surface of the second lens portion or that of the third lens portion. Accordingly, the mud and water are easily removed from the head light unit and its periphery.

According to the saddle-ride type vehicle of the second aspect, mud and water are easily discharged from the head light unit and its periphery due to the shapes, slanted forwardly downwards, of the upper protruding section and the lower protruding section.

According to the saddle-ride type vehicle of the third aspect, the lower protruding section prevents mud and water, splashed from the below, from being easily attached to the lens portions.

According to the saddle-ride type vehicle of the fourth aspect, the cover front edge portion is extended obliquely downwards and rearwards from the front end of the lower protruding section. Therefore, the cover front edge portion prevents mud and water from easily flowing over the head light unit from the below along the surface of the front cover portion.

According to the saddle-ride type vehicle of the fifth aspect, the cover upper edge portion is outwardly protruded from the upper edge portions of the lens portions. Therefore, the head light unit is prevented from being easily splashed with mud and water from the above.

According to the saddle-ride type vehicle of the sixth aspect, the upper edge portions of the lens portions are positioned further inwards in the front cover portion than the cover upper edge portion. Therefore, the head light unit is prevented from being easily splashed with mud and water from the above.

According to the saddle-ride type vehicle of the seventh aspect, the cover lower edge portion is outwardly protruded from the lower edge portions of the lens portions. Therefore, the head light unit is prevented from being easily splashed with mud and water from the below.

According to the saddle-ride type vehicle of the eighth aspect, the lower edge portions of the lens portions are positioned further inwards in the front cover portion than the cover lower edge portion. Therefore, the head light unit is prevented from being easily splashed with mud and water from the below.

According to the saddle-ride type vehicle of the ninth aspect, it is possible to drop, from the recess, the water downwardly flowing along either the left slope surface or the right slope surface. Accordingly, mud and water can be easily removed from the head light unit and its periphery.

According to the saddle-ride type vehicle of the tenth aspect, each of the second lens portion and the third lens portion is largely extended backwardly upwards. Therefore, the visibility of the head light unit can be enhanced.

According to the saddle-ride type vehicle of the eleventh aspect, the second light source portion and the third light source portion can be used as flasher lights.

According to the saddle-ride type vehicle of the twelfth aspect, the second light source portion and the third light source portion are disposed in positions closer to the first light source portion in the up-and-down direction. Accordingly, size reduction can be achieved for the vehicle front portion.

According to the saddle-ride type vehicle of the thirteenth aspect, the second reflector portion enables the light from the second light source portion can be irradiated in a wide range by the second reflector portion. Further, the light from the third light source portion can be irradiated in a wide range by the third reflector portion.

According to the saddle-ride type vehicle of the fourteenth aspect, mud and water are prevented from being easily attached to the lens member.

According to the saddle-ride type vehicle of the fifteenth aspect, the mud and water attached to the front cover portion easily flow rearwards.

According to the saddle-ride type vehicle of the sixteenth aspect, the mud and water attached to the lens portions easily flow rearwards.

### Brief Description of Drawings

- FIG. 1: is a left side view of a saddle-ride type vehicle according to a present exemplary embodiment.
- FIG. 2: is a plan view of the saddle-ride type vehicle.
- FIG. 3: is a front view of the saddle-ride type vehicle.
- FIG. 4: is an enlarged side view of a front portion of the saddle-ride type vehicle.
- FIG. 5: is an enlarged front view of the front portion of the saddle-ride type vehicle.
- FIG. 6: is a perspective view of the front portion of the saddle-ride type vehicle.
- FIG. 7: is a diagram of a portion of a VII-VII cross-section in FIG. 4.
- FIG. 8: is a plan view of a head light unit.
- FIG. 9: is a front view of the head light unit from which a lens member is detached.
- FIG. 10: is a cross-sectional view of the front portion of the saddle-ride type vehicle including the head light unit.
- FIG. 11: is a front view of a housing.
- FIG. 12: is a perspective view of the front portion of the saddle-ride type vehicle.

### Description of Embodiments

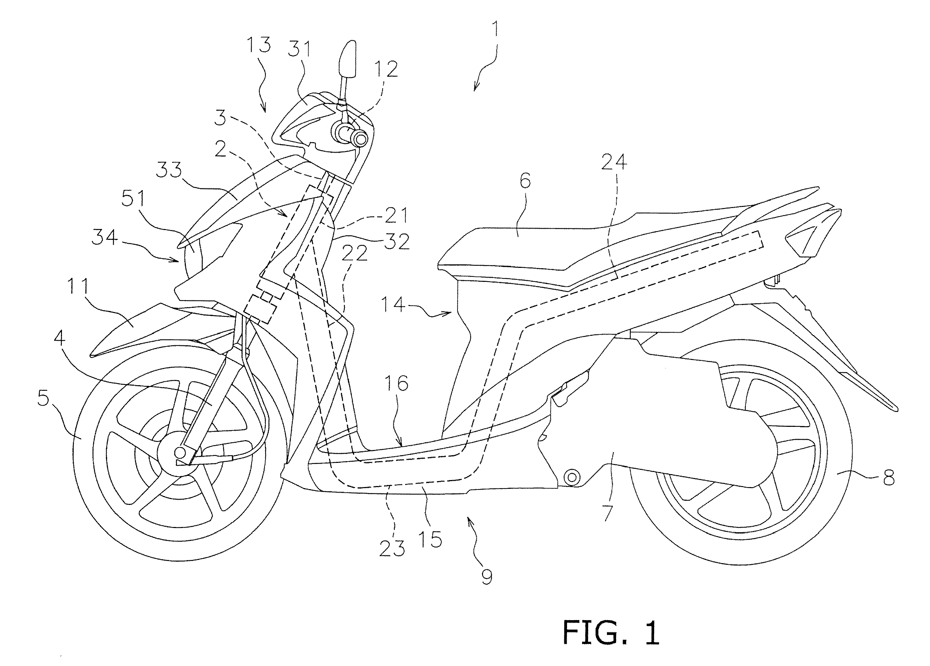

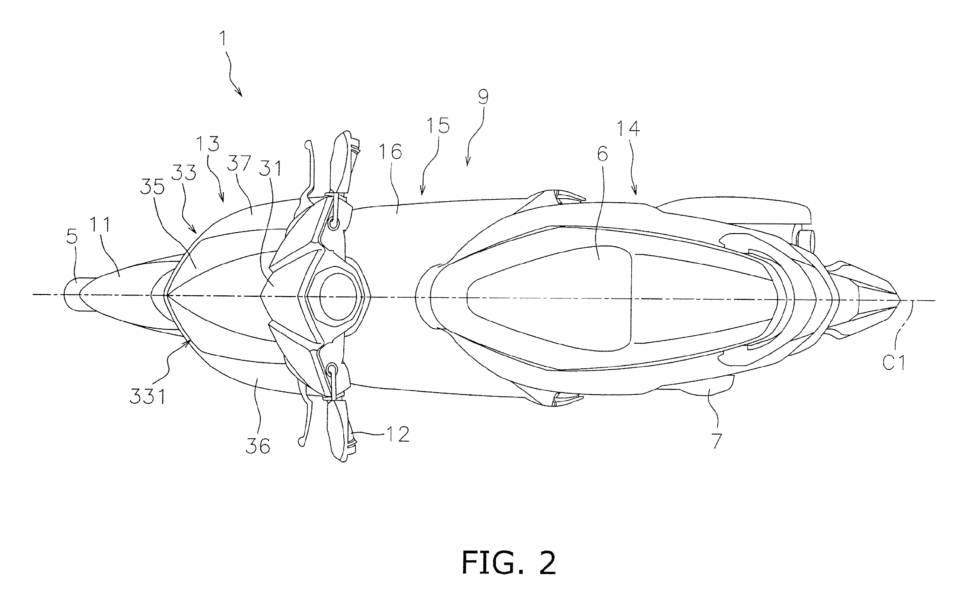

A saddle-ride type vehicle 1 according to an exemplary embodiment will be hereinafter explained with reference to the figures. FIG. 1 is a left side view of the saddle-ride type vehicle 1 according to the present exemplary embodiment. FIG. 2 is a plan view of the saddle-ride type vehicle 1. The saddle-ride type vehicle 1 is a scooter-type motorcycle. The saddle-ride type vehicle 1 includes a vehicle body frame 2, a steering shaft 3, a front fork 4, a front wheel 5, a seat 6, an engine unit 7, a rear wheel 8 and a vehicle body cover 9. It should be noted in the present exemplary embodiment that a back-and-forth direction refers to a vehicle longitudinal direction seen from a rider seated on the seat 6. A right-and-left direction refers to a vehicle transverse direction seen from a rider seated on the seat 6. A front view and a side view respectively refer to a vehicle front view and a vehicle side view. Further, in the present exemplary embodiment, the term "laterally outwards" means a direction away from a vehicle center line (see C1 in FIG. 2) that is extended in the back-and-forth direction while passing through the center in the vehicle transverse direction. The term "laterally inwards" means a direction closer to the vehicle center line (see C1 in FIG. 2) that is extended in the back-and-forth direction while passing through the center in the vehicle transverse direction.

The vehicle body frame 2 is formed by, for example, pipes made of iron. The vehicle body frame 2 includes a head pipe portion 21, a down frame portion 22, an under frame portion 23 and a rear frame portion 24. It should be noted that the vehicle body frame 2 may be integrally formed by means of, for instance, bending, or alternatively, may be formed by integrating a plurality of components by means of, for instance, welding. The head pipe portion 21 is positioned in the vehicle center in the vehicle transverse direction. The steering shaft 3 is rotatably inserted into the head pipe portion 21. A handle portion 12 is coupled to the upper portion of the steering shaft 3. The front fork 4 is coupled to the lower portion of the steering shaft 3. The front fork 4 supports the front wheel 5 in a rotatable state. A front fender 11 is disposed over the front wheel 5.

The down frame portion 22 is connected to the head pipe portion 21. The down frame portion 22 is downwardly extended from the head pipe portion 21. The under frame portion 23 is connected to the bottom end of the down frame portion 22. The under frame portion 23 is backwardly extended from the down frame portion 22. The rear frame portion 24 is connected to the rear end of the under frame portion 23. The rear frame portion 24 is extended obliquely rearwards and upwards from the rear end of the under frame portion 23.

The seat 6 is disposed over the rear frame portion 24. The seat 6 is positioned rearwards of the head pipe portion 21. The seat 6 is supported by the vehicle body frame 2. Specifically, the seat 6 is attached to the rear frame portion 24.

The engine unit 7 is disposed under the seat 6. The engine unit 7 is supported by the vehicle body frame 2. The engine unit 7 is pivotably attached to the vehicle body frame 2 through a bracket (not illustrated in the figures). The engine unit 7 includes an output shaft (not illustrated in the figures). The rear wheel 8 is rotatably supported by the output shaft.

As illustrated in FIG. 1, the vehicle body cover 9 includes a front portion cover 13, a rear portion cover 14 and an under cover 15. The front portion cover 13 covers the surrounding of the head pipe portion 21 and the down frame portion 22. The front portion cover 13 will be explained below in detail. The rear portion cover 14 is positioned under the seat 6. The rear portion cover 14 covers the front side and the both lateral sides of the rear frame portion 24. The under cover 15 is positioned between the front portion cover 13 and the rear portion cover 14 in the back-and-forth direction. The under cover 15 couples the front portion cover 13 and the rear portion cover 14. The under cover 15 includes a footboard 16.

The footboard 16 is positioned between the front wheel 5 and the seat 6 in the back-and-forth direction. The footboard 16 is positioned forwards of and lower than the seat 6. The footboard 16 is disposed in front of the engine unit 7. The footboard 16 is a surface on which a rider seated on the seat 6 puts his/her feet during travelling. The footboard 16 is positioned over the under frame portion 23. The footboard 16 is positioned between the down frame portion 22 and the rear frame portion 24 in the back-and-forth direction. The footboard 16 has an entirely flat shape in the vehicle transverse direction. The expression "the footboard 16 is flat" herein means that the footboard 16 is flat to the extent of allowing a rider to put his/her feet on any portion of the footrest portion. In other words, a convexo-concave may be formed on the footboard 16 for an antiskid purpose or etc.

The front portion cover 13 includes a handle cover portion 31, a rear-side cover portion 32 and a front cover portion 33. The handle cover portion 31 is disposed in front of the handle portion 12. The rear-side cover portion 32 is disposed behind the head pipe portion 21 and the down frame portion 22. The front cover portion 33 is disposed in front of the head pipe portion 21.

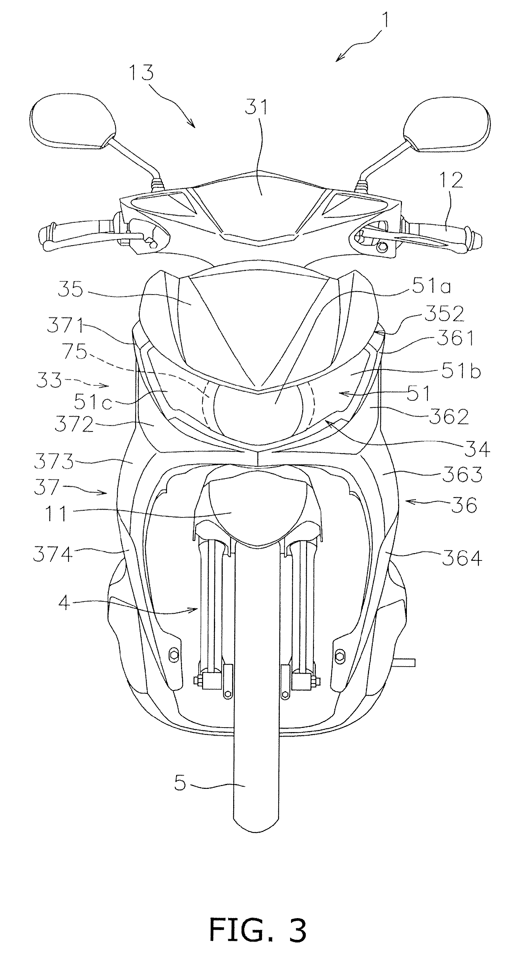

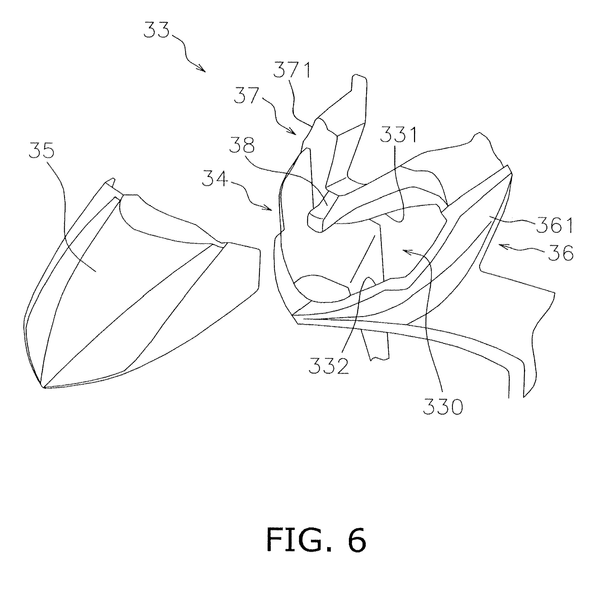

The front cover portion 33 includes a shape that the lower portion thereof is positioned forwards of the upper portion thereof. A head light unit 34 is disposed in the lower portion of the front cover portion 33. The head light unit 34 includes a lens member 51. The lens member 51 is made of material with translucency. For example, the lens member 51 is made of translucent resin. The front cover portion 33 includes an opening portion 330 (see FIG. 6). The head light unit 34 is attached to the front cover portion 33 while the lens member 51 is exposed from the opening portion 330. FIG. 3 is a front view of the saddle-ride type vehicle 1. As illustrated in FIG. 3, the lens member 51 includes a first lens portion 51 a, a second lens portion 51 b and a third lens portion 51 c. The first lens portion 51 a is disposed between the second lens portion 51 b and the third lens portion 51 c. The second lens portion 51 b is disposed on the left side of the first lens portion 51 a. The second lens portion 51 b is continued to the first lens portion 51 a on the left side of the first lens portion 51 a. The third lens portion 51 c is disposed on the right side of the first lens portion 51 a. The third lens portion 51 c is continued to the first lens portion 51 a on the right side of the first lens portion 51a. The head light unit 34 will be explained below in detail.

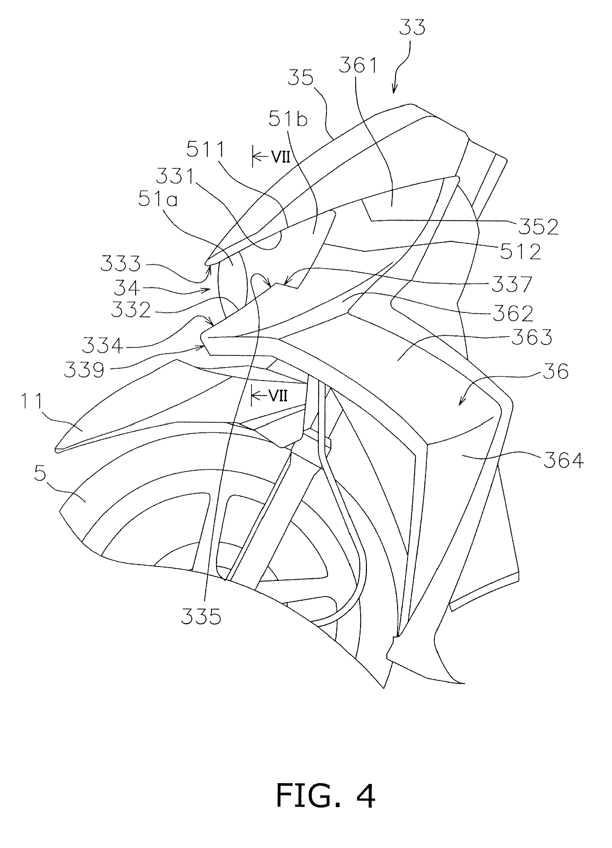

The front cover portion 33 includes a front surface portion 35, a left lateral surface portion 36 and a right lateral surface portion 37. The front surface portion 35 is disposed in front of the head pipe portion 21. The front surface portion 35 is disposed over the head light unit 34. FIG. 4 is an enlarged side view of the front portion of the saddle-ride type vehicle 1. As illustrated in FIG. 4, the front surface portion 35 is slanted forwards and downwards. The front surface portion 35 is disposed adjacently to an upper edge portion 511 of the lens member 51.

The left lateral surface portion 36 is disposed under the front surface portion 35. The left lateral surface portion 36 is disposed on the left side of the head pipe portion 21. The left lateral surface portion 36 is disposed adjacently to a lower edge portion 512 of the lens member 51. The left lateral surface portion 36 includes a first left lateral surface 361, a second left lateral surface 362, a third left lateral surface 363 and a fourth left lateral surface 364. The first left lateral surface 361 is disposed adjacently to the lower edge portion 512 of the lens member 51. As illustrated in FIG. 3, the first left lateral surface 361 is disposed on the left side of the lens member 51 in a front view. The first left lateral surface 361 is extended downwards and laterally inwards from a left side section 352 of the front surface portion 35 in a front view. The second left lateral surface 362 is disposed under the first left lateral surface 361. The second left lateral surface 362 is downwardly extended from the lower portion of the first left lateral surface 361. The second left lateral surface 362 is positioned higher than the front wheel 5 in a front view. The second left lateral surface 362 is positioned higher than the front fender 11 in a front view. The third left lateral surface 363 is positioned under the second left lateral surface 362. The third left lateral surface 363 is extended downwards and laterally outwards from the lower portion of the second left lateral surface 362. The third left lateral surface 363 is disposed on the left side of the front wheel 5 in a front view. The third left lateral surface 363 is disposed on the left side of the front fender 11 in a front view. The fourth left lateral surface 364 is disposed under the third left lateral surface 363. The fourth left lateral surface 364 is extended downwards and laterally inwards from the third left lateral surface 363. The fourth left lateral surface 364 is disposed on the left side of the front wheel 5 in a front view. As illustrated in FIG. 4, the first left lateral surface 361 is disposed adjacently to the lower edge portion 512 of the lens member 51. The first left lateral surface 361 is extended rearwards and upwards in a side view. The second left lateral surface 362 is extended rearwards and upwards. The third left lateral surface 363 is disposed behind the front fender 11. The third left lateral surface 363 is extended rearwards and downwards. The fourth left lateral surface 364 is disposed behind the front wheel 5. The fourth left lateral surface 364 is extended downwards. The fourth left lateral surface 364 is connected to the aforementioned under cover 15.

As illustrated in FIG. 3, the right lateral surface portion 37 is disposed under the front surface portion 35. The right lateral surface portion 37 is disposed on the right side of the head pipe portion 21. The right lateral surface portion 37 is disposed adjacently to the lower edge portion 512 of the lens member 51. The right lateral surface portion 37 includes a first right lateral surface 371, a second right lateral surface 372, a third right lateral surface 373 and a fourth right lateral surface 374. The right lateral surface portion 37 includes a bilaterally symmetric shape to the left lateral surface portion 36. Therefore, the first right lateral surface 371, the second right lateral surface 372, the third right lateral surface 373 and the fourth right lateral surface 374 are respectively disposed bilaterally symmetric to the first left lateral surface 361, the second left lateral surface 362, the third left lateral surface 363 and the fourth left lateral surface 364.

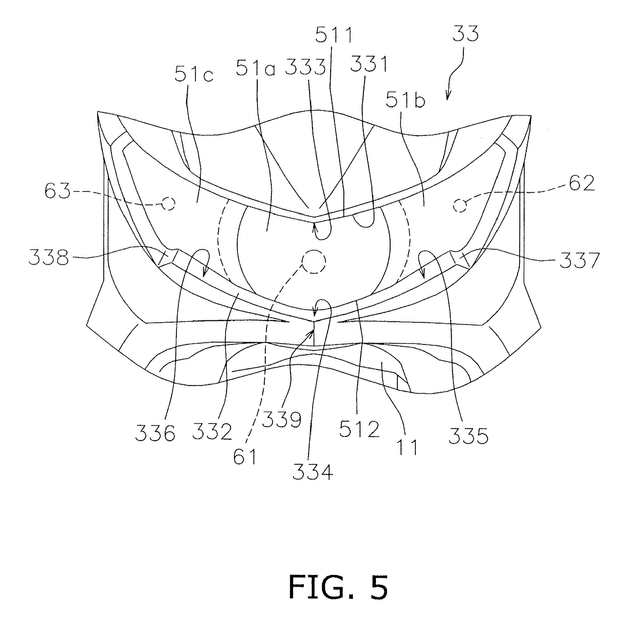

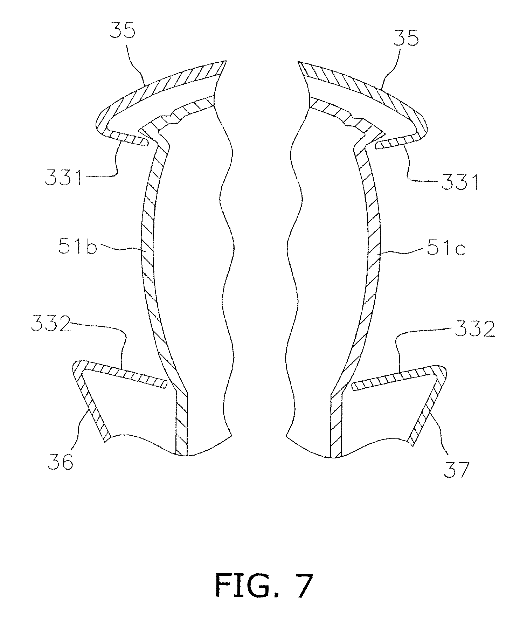

FIG. 5 is an enlarged front view of the front portion of the saddle-ride type vehicle 1. FIG. 6 is a perspective view of the front cover portion 33. FIG. 7 is a partial view of a cross-section of FIG. 4 sectioned along a line VII-VII. As illustrated in FIGS. 4 to 7, the front cover portion 33 includes a cover upper edge portion 331 and a cover lower edge portion 332. The cover upper edge portion 331 and the cover lower edge portion 332 form the aforementioned opening portion 330. The cover upper edge portion 331 is positioned over the first lens portion 51a, the second lens portion 51 b and the third lens portion 51 c in a front view. The cover upper edge portion 331 is disposed adjacently to the upper edge portion 511 of the lens member 51. The cover upper edge portion 331 is outwardly protruded from the upper edge portion 511 of the lens member 51. In other words, the upper edge portion 511 of the lens member 51 is positioned further inwards in the front cover portion 33 than the cover upper edge portion 331. Therefore, as illustrated in a plan view of FIG. 2, the lens member 51 is invisible while being hidden under the front surface portion 35. In a plan view, the cover upper edge portion 331 includes a forwardly convex curved shape. As illustrated in FIGS. 4 and 5, the cover lower edge portion 332 is positioned under the first lens portion 51a, the second lens portion 51 b and the third lens portion 51 c in a front view. The cover lower edge portion 332 is disposed adjacently to the lower edge portion 512 of the lens member 51. The cover lower edge portion 332 is outwardly protruded from the lower edge portion 512 of the lens member 51. In other words, the lens member 51 is positioned further inwards in the front cover portion 33 than the cover lower edge portion 332.

The cover upper edge portion 331 includes an upper protruding section 333 protruded forwards of the first lens portion 51a. The upper protruding section 333 includes a shape slanted forwardly downwards. The front end of the upper protruding section 333 is positioned forwards of the first lens portion 51 a. The front end of the upper protruding section 333 is positioned forwards of the bottom edge portion of the first lens portion 51 a. The cover lower edge portion 332 includes a lower protruding section 334 protruded forwards of the first lens portion 51 a. The lower protruding section 334 includes a shape slanted forwardly downwards. The lower protruding section 334 is extended to a position located forwards of the upper protruding section 333. In other words, the front end of the lower protruding section 334 is positioned forwards of the front end of the upper protruding section 333.

As illustrated in FIG. 5, the cover lower edge portion 332 further includes a left slope surface 335 and a right slope surface 336. The left slope surface 335 is positioned on the left side of the lower protruding section 334 and is slanted forwardly downwards. The right slope surface 336 is positioned on the right side of the lower protruding section 334 and is slanted forwardly downwards. The left slope surface 335 includes a left recess 337 downwardly recessed. The right slope surface 336 includes a right recess 338 downwardly recessed.

The front cover portion 33 further includes a cover front edge section 339. As illustrated in FIG. 4, the cover front edge section 339 is extended obliquely downwards and rearwards from the front end of the lower protruding section 334 in a side view. The cover front edge section 339 is disposed over the front fender 11.

As illustrated in FIG. 6, the front surface portion 35 is a member provided separately from the left lateral surface portion 36 and the right lateral surface portion 37. The front cover portion 33 includes a coupling portion 38. The coupling portion 38 couples the left lateral surface portion 36 and the right lateral surface portion 37 to each other. The coupling portion 38 couples the upper portion of the left lateral surface portion 36 and the upper portion of the right lateral surface portion 37 to each other. More specifically, the coupling portion 38 couples the upper portion of the first left lateral surface 361 and the upper portion of the first right lateral surface 371 to each other. The coupling portion 38 is disposed over the head light unit 34. The coupling portion 38 is disposed under the front surface portion 35. Thus, the left lateral surface portion 36 and the right lateral surface portion 37 are coupled to each other by the coupling portion 38. Therefore, it is possible to enhance the stiffness of the left lateral surface portion 36 and that of the right lateral surface portion 37. Further, the front surface portion 35 is a member provided separately from the left lateral surface portion 36 and the right lateral surface portion 37. Therefore, it is possible to easily set the color of the front surface portion 35 to be different from that of the left lateral surface portion 36 and that of the right lateral surface portion 37.

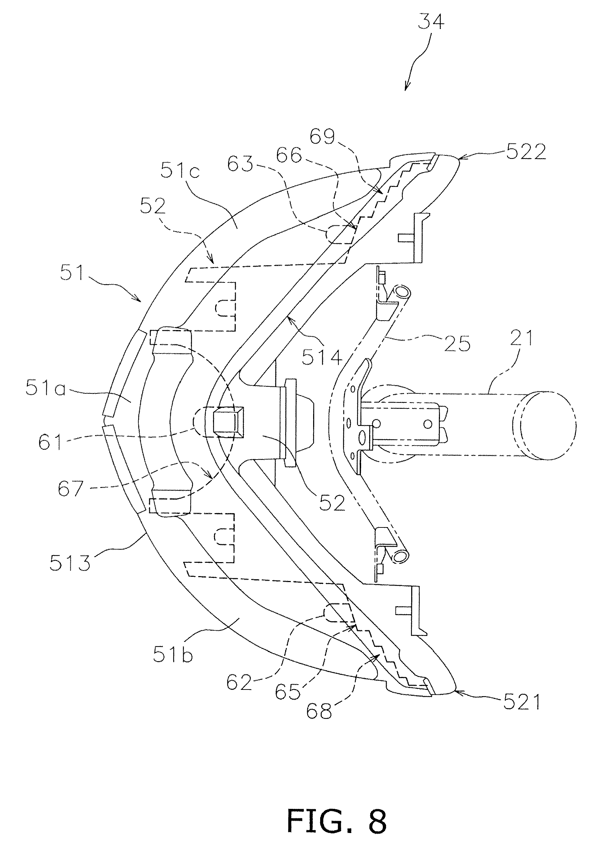

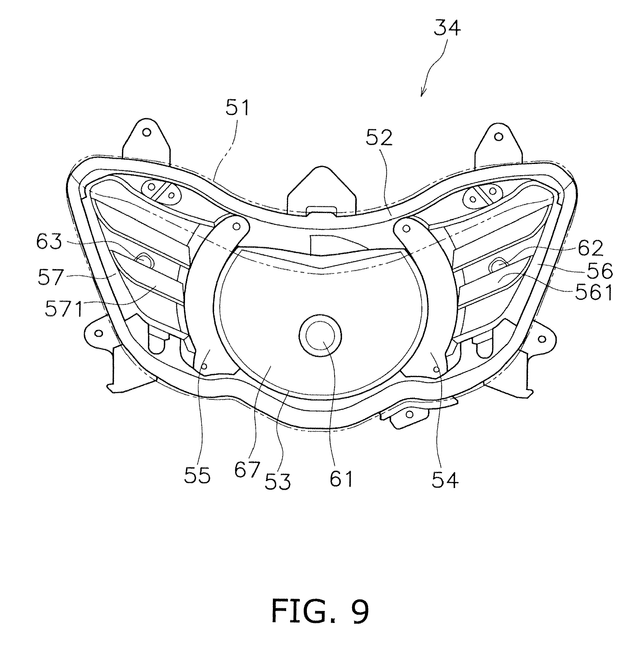

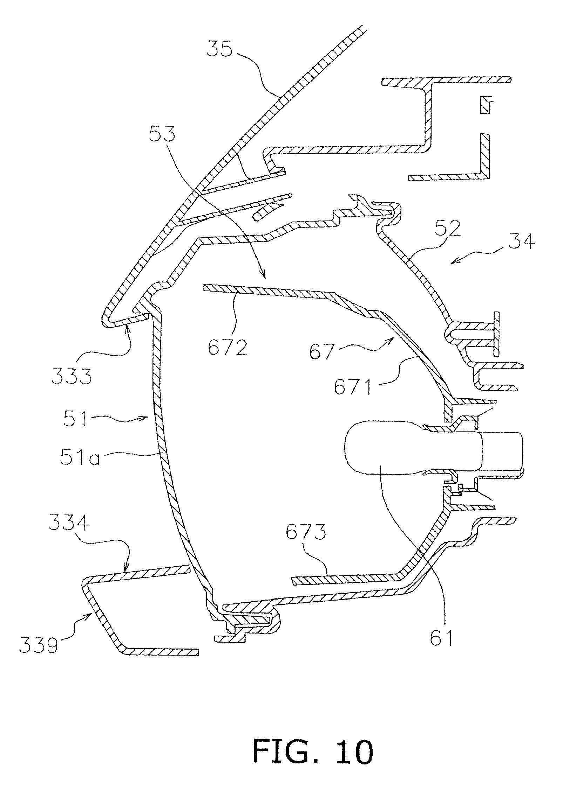

FIG. 8 is a plan view of the head light unit 34. It should be noted that FIG. 8 conceptually depicts the position of the head pipe portion 21 and that of a bracket 25 attached to the head pipe portion 21 with dashed two-dotted lines. FIG. 9 is a front view illustrating the head light unit 34 that the lens member 51 is detached therefrom. It should be noted that FIG. 9 conceptually depicts the position of the lens member 51 with a dashed two-dotted line. FIG. 10 is a cross-sectional view of the front portion, including the head light unit 34, of the saddle-ride type vehicle 1. As illustrated in FIGS. 8 to 10, the head light unit 34 includes the lens member 51, a housing 52, a reflector member 53, a left position light lens 54, a right position light lens 55, a left louver member 56 and a right louver member 57.

As illustrated in a plan view of FIG. 8, similarly to the cover upper edge portion 331, a front edge portion 513 of the lens member 51 includes a forwardly convex curved shape. In a plan view, a rear edge portion 514 of the lens member 51 includes a forwardly convex curved shape.

The housing 52 is disposed behind the lens member 51. A left side portion 521 of the rear surface of the housing 52 is positioned rearwards of a vehicle-transversely middle portion of the rear surface of the housing 52. A right side portion 522 of the rear surface of the housing 52 is positioned rearwards of the vehicle-transversely middle portion of the rear surface of the housing 52. The left side portion 521 and the right side portion 522 of the rear surface of the housing 52 are positioned rearwards of at least a portion of the head pipe portion 21 in a plan view. The left side portion 521 and the right side portion 522 of the rear surface of the housing 52 are positioned rearwards of at least a portion of the bracket 25 in a plan view.

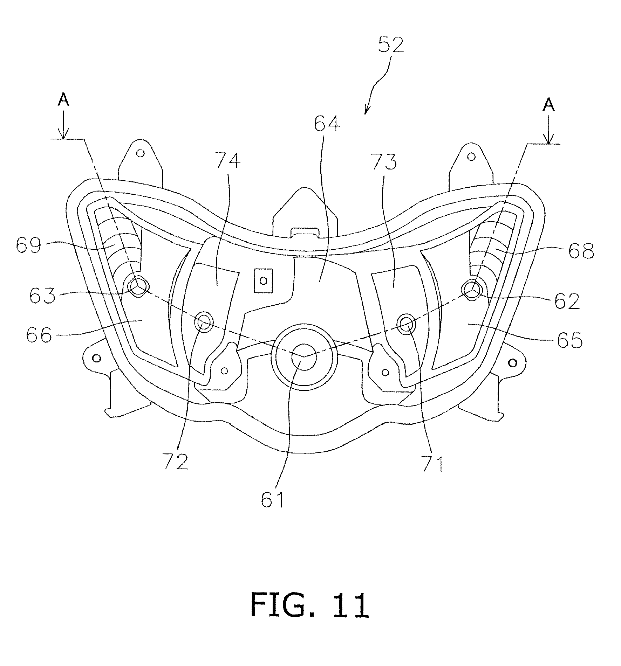

FIG. 11 is a front view of the housing 52. As illustrated in FIG. 11, the head light unit 34 includes a first light source portion 61, a second light source portion 62 and a third light source portion 63. The first light source portion 61, the second light source portion 62 and the third light source portion 63 are attached to the housing 52. The first light source portion 61 is a lead light bulb. The second light source portion 62 is a left flasher bulb. The third light source portion 63 is a right flasher bulb. The first light source portion 61 is disposed behind the first lens portion 51a. The second light source portion 62 is disposed behind the second lens portion 51 b. The third light source portion 63 is disposed behind the third lens portion 51 c. The second light source portion 62 and the third light source portion 63 are disposed higher than the first light source portion 61. The second light source portion 62 and the third light source portion 63 are disposed lower than the upper end of the first lens portion 51 a.

The housing 52 includes a middle attachment portion 64, a second reflector portion 65 and a third reflector portion 66. The middle attachment portion 64 is positioned in the middle of the housing 52 in the vehicle transverse direction. The second reflector portion 65 is positioned leftwards of the middle attachment portion 64. The third reflector portion 66 is positioned rightwards of the middle attachment portion 64. The first light source portion 61 is attached to the middle attachment portion 64. The reflector member 53, illustrated in FIGS. 9 and 10, is attached to the middle attachment portion 64. The reflector member 53 is a member provided separately from the housing 52. The reflector member 53 is disposed in front of the middle attachment portion 64. The reflector member 53 includes a first reflector portion 67. The first reflector portion 67 is mirror-finished. The first reflector portion 67 forwardly reflects light from the first light source portion 61. The second reflector portion 65 and the third reflector portion 66 are mirror-finished. The second reflector portion 65 forwardly reflects light from the second light source portion 62. The third reflector portion 66 forwardly reflects light from the third light source portion 63.

FIG. 8 illustrates the housing 52, sectioned along a cutting line A-A in FIG. 11, with a broken line. As illustrated in FIG. 8, the aforementioned first lens portion 51a is disposed in front of the first reflector portion 67. The second lens portion 51 b is disposed while being extended to a position located rearwards of the first reflector portion 67. The second lens portion 51 b is disposed while being extended to a position located rearwards of and higher than the first reflector portion 67. The second lens portion 51 b is disposed in front of the second reflector portion 65. The third lens portion 51c is disposed while being extended to a position located rearwards of the first reflector portion 67. The third lens portion 51c is disposed while being extended to a position located rearwards of and higher than the first reflector portion 67. The third lens portion 51 c is disposed in front of the third reflector portion 66.

The second reflector portion 65 includes a left-side reflection surface 68. The left-side reflection surface 68 is disposed on the left side of the second light source portion 62. The left-side reflection surface 68 is extended leftwards and rearwards. The left-side reflection surface 68 includes a stepped shape. The third reflector portion 66 includes a right-side reflection surface 69. The right-side reflection surface 69 is disposed on the right side of the third light source portion 63. The right-side reflection surface 69 is extended rightwards and rearwards. The right-side reflection surface 69 includes a stepped shape.

As illustrated in FIG. 10, the first reflector portion 67 includes a curved surface portion 671, an upper wall portion 672 and a lower wall portion 673. The curved surface portion 671 includes a curved shape recessed rearwards. The first light source portion 61 is attached to the curved surface portion 671. The upper wall portion 672 is forwardly extended from the upper section of the curved surface portion 671. The lower wall portion 673 is forwardly extended from the lower section of the curved surface portion 671. The front end section of the upper wall portion 672 is positioned forwards of front end section of the lower wall portion 673. Therefore, the light reflected by the upper wall portion 672 can be prevented from being blocked by the aforementioned lower protruding section 334 even when the lower protruding section 334 is largely protruded forwards of the first lens portion 51 a.

As illustrated in FIG. 11, the head light unit 34 includes a fourth light source portion 71 and a fifth light source portion 72. The fourth light source portion 71 and the fifth light source portion 72 are attached to the housing 52. The fourth light source portion 71 is a left position bulb. The fifth light source portion 72 is a right position bulb. The fourth light source portion 71 is disposed on the left side of the first light source portion 61. The fifth light source portion 72 is disposed on the right side of the first light source portion 61. The fourth light source portion 71 is disposed between the first light source portion 61 and the second light source portion 62 in the vehicle transverse direction. The fifth light source portion 72 is disposed between the first light source portion 61 and the third light source portion 63 in the vehicle transverse direction. The housing 52 includes a fourth reflector portion 73 and a fifth reflector portion 74. The fourth reflector portion 73 and the fifth reflector portion 74 are mirror-finished. The fourth reflector portion 73 forwardly reflects light from the fourth light source portion 71. The fifth reflector portion 74 forwardly reflects light from the fifth light source portion 72.

The left position light lens 54 and the right position light lens 55, illustrated in FIG. 9, are members provided separately from the lens member 51 and the housing 52. The left position light lens 54 and the right position light lens 55 are made of a translucent material. The left position light lens 54 and the right position light lens 55 have a color different from that of the lens member 51. The left position light lens 54 and the right position light lens 55 are members provided separately from each other. It should be noted that the left position light lens 54 and the right position light lens 55 may be an integrated member. The left position light lens 54 is disposed on the left side of the reflector member 53. The right position light lens 55 is disposed on the right side of the reflector member 53. In a front view, the left position light lens 54 includes a shape curved in a circular-arc form. In a front view, the right position light lens 55 includes a shape curved in a circular-arc form. With the structures, a position light 75 having an annular shape is formed as illustrated in FIG. 3. Accordingly, the position light 75 reliably have a large light emission area, while increase in size of the front cover portion 33 is inhibited.

The left louver member 56 and the right louver member 57 are members provided separately from the lens member 51 and the housing 52. The left louver member 56 is disposed in front of the second reflector portion 65. The left louver member 56 is disposed on the left side of the left position light lens 54. The left louver member 56 includes a plurality of fins 561. The plural fins 561 are disposed away from each other in the up-and-down direction. In a front view, each fin 561 is extended obliquely leftwards and upwards. The right louver member 57 is disposed in front of the third reflector portion 66. The right louver member 57 is disposed on the right side of the right position light lens 55. The right louver member 57 includes a plurality of fins 571. The plural fins 571 are disposed away from each other in the up-and-down direction. In a front view, each fin 571 is extended obliquely rightwards and upwards. The amount of light can be regulated by selectively using the left louver member 56 having different intervals between adjacent fins 561 and the light louver member 57 having different intervals between adjacent fins 571 without changing the size of the second light source portion 62 and that of the third light source portion 63.

The saddle-ride type vehicle 1 according to the present exemplary embodiment has the following features.

The upper protruding section 333 is protruded further forwards than the first lens portion 51a. Therefore, the head light unit 34 is prevented from being easily splashed with mud and water from the above of the front cover portion 33. Moreover, the lower protruding section 334 is protruded further forwards than the first lens portion 51 a. Therefore, the head light unit 34 is prevented from being easily splashed with mud and water from the below of the front cover portion 33. Further, even when attached to the head light unit 34, mud and water backwardly flow along either the cover upper edge portion 331 or the cover lower edge portion 332. Therefore, mud and water are easily removed from the head light unit 34 and the periphery thereof. Alternatively, mud and etc. attached to the first lens portion 51 a backwardly flow along either the surface of the second lens portion 51 b or that of the third lens portion 51 c. Therefore, mud and etc. are easily removed from the head light unit 34 and the periphery thereof.

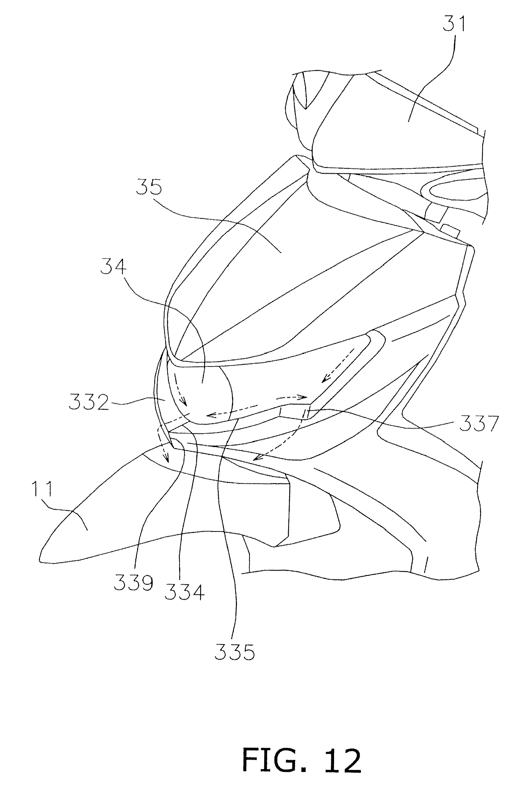

Each of the upper protruding section 333 and the lower protruding section 334 includes a shape slanted forwardly downwards. Therefore, mud and water attached to the head light unit 34 flow along the cover lower edge portion 332 and are easily discharged from the lower protruding section 334 as depicted with arrows in FIG. 12. With the structure, mud and water are easily discharged from the head light unit 34 and the periphery thereof.

The cover front edge section 339 is extended obliquely downwards and rearwards from the front end of the lower protruding section 334. Therefore, mud and water are prevented from easily flowing over the head light unit 34 from below along the surface of the front cover portion 33.

The cover upper edge portion 331 is outwardly protruded from the upper edge portion 511 of the lens member 51. In other words, the upper edge portion 511 of the lens member 51 is positioned further inwards in the front cover portion 33 than the cover upper edge portion 331. Therefore, the head light unit 34 is prevented from being easily splashed with mud and water from above.

The cover lower edge portion 332 is outwardly protruded from the lower edge portion 512 of the lens member 51. In other words, the lower edge portion 512 of the lens member 51 is positioned further inwards in the front cover portion 33 than the cover lower edge portion 332. Therefore, the head light unit 34 is prevented from being easily splashed with mud and water from below.

The cover lower edge portion 332 includes the left recess 337 and the right recess 338. Therefore, it is possible to drop from the left recess 337 the water downwardly flowing from the above of the left recess 337 along the left slope surface 335 as illustrated in FIG. 12. Alternatively, it is possible to drop from the left recess 337 the water upwardly flowing from the below of the left recess 337 along the left slope surface 335. Similarly, it is possible to drop from the right recess 338 the water flowing along the right slope surface 336. Accordingly, mud and water are easily removed from the head light unit 34 and the periphery thereof.

Each of the second lens portion 51 b and the third lens portion 51 c is largely extended backwardly upwards. Therefore, it is possible to enhance the visibility of the head light unit 34. Especially, the second light source portion 62 and the third light source portion 63 are both flasher bulbs. Therefore, the visibility of the flasher light can be enhanced.

The second light source portion 62 and the third light source portion 63 are disposed in positions closer to the first light source portion 61 in the up-and-down direction. Therefore, the size of the head light unit 34 can be reduced in the up-and-down direction. Accordingly, the size of the front cover portion 33 can be reduced. It should be noted that a drawback of increasing the size of the front cover portion 33 is produced when the structure that the upper protruding section 333 and the lower protruding section 334 are protruded further forwards than the first lens portion 51 a (hereinafter referred to as "a protection structure for a head light") is implemented by disposing the upper protruding section 333 and the lower protruding section 334 further forward than well-known positions thereof as described above. Therefore, the aforementioned protection structure for a head light is preferably implemented by disposing the first lens portion 51 a further rearward than a well-known position thereof. However, a limitation is imposed on the inner space, in which the head light unit 34 is disposed, of the front cover portion 33. Therefore, it is not easy to dispose the head light unit 34 further rearward than a well-known position thereof. In view of this, the saddle-ride type vehicle 1 according to the present exemplary embodiment employs the structure of the head light unit 34 as described above. Accordingly, the aforementioned protection structure for a head light can be implemented while increase in size of the front cover portion 33 can be inhibited.

The second reflector portion 65 includes the left-side reflection surface 68. Therefore, it is possible to irradiate light from the second light source portion 62 in a wide range. Further, the third reflector portion 66 includes the right-side reflection surface 69. Therefore, it is possible to irradiate light from the third light source portion 63 in a wide range. Therefore, a wide irradiation range can be reliably produced for the flasher light even when the head light unit 34 is disposed further rearwards than a well-known position thereof.

An exemplary embodiment has been explained above. However, the present teaching is not limited to the aforementioned exemplary embodiment, and a variety of changes can be herein made without departing from the scope of the present teaching.

The saddle-ride type vehicle is not limited to the motorcycle and includes a three wheeler, an all-terrain vehicle and a snowmobile. Further, the motorcycle is not limited to the scooter and includes a moped or a sport-type motorcycle.

In the aforementioned exemplary embodiment, the cover upper edge portion 331 includes a shape outwardly protruded from the first to third lens portions 51 a to 51 c. However, only a portion of the cover upper edge portion 331 may have a shape outwardly protruded from the first to third lens portions 51 a to 51 c. For example, only the upper protruding section 333 may have a shape outwardly protruded from the first to third lens portions 51a to 51c. The cover lower edge portion 332 includes a shape outwardly protruded from the first to third lens portions 51 a to 51 c. However, only a portion of the cover lower edge portion 332 may have a shape outwardly protruded from the first to third lens. For example, only the lower protruding section 334 may have a shape outwardly protruded from the first to third lens portions 51 a to 51 c.

The shapes of the cover upper edge portion 331 and the cover lower edge portion 332 are not limited to those set in the aforementioned exemplary embodiment. For example, the left recess 337 and the right recess 338 may not be disposed on the cover lower edge portion 332. It should be noted that it is preferable to provide the left recess 337 and the right recess 338 for more efficiently discharging the water flowing along the cover lower edge portion 332.

The structure of the head light unit 34 is not limited to that set in the aforementioned exemplary embodiment. For example, the head light unit 34 may not include the second light source portion 62 and the third light source portion 63. The head light unit 34 may not include the fourth light source portion 71 and the fifth light source portion 72. The second light source portion 62 and the third light source portion 63 are not limited to the flasher bulbs and may be any other types of bulbs. The fourth light source portion 71 and the fifth light source portion 72 are not limited to the position bulbs and may be any other types of bulbs. The first reflector portion 67, the second reflector portion 65 and the third reflector portion 66 may be separated portions, or alternatively, an integrated portion. The head light unit 34 may not include the left louver member 56 and the right louver member 57. Each of the left-side reflection surface 68 and the right-side reflection surface 69 may not be formed in a stepped shape and may be formed in either a liner shape or a curved shape. Alternatively, the left-side reflection surface 68 and the right-side reflection surface 69 may not be provided. It should be noted that it is preferable to provide the left-side reflection surface 68 and the right-side reflection surface 69 for reliably producing a wide irradiation range for each of the second light source portion 62 and the third light source portion 63.

The second lens portion 51 b may not be extended to a position located rearwards of the entirety of the first reflector portion 67. In other words, the second lens portion 51 b is only required to be extended to a position located rearwards of a portion of the first reflector portion 67. The second lens portion 51 b may not be extended to a position located rearwards of and higher than the entirety of the first reflector portion 67. The second lens portion 51 b is only required to be extended to a position located rearwards of and higher than a portion of the first reflector portion 67. The third lens portion 51 c may not be extended to a position located rearwards of the entirety of the first reflector portion 67. In other words, the third lens portion 51 c is only required to be extended to a position located rearwards of a portion of the first reflector portion 67. The third lens portion 51c may not be extended to a position located rearwards of and higher than the entirety of the first reflector portion 67. The third lens portion 51 c is only required to be extended to a position located rearwards of and higher than a portion of the first reflector portion 67.

In the aforementioned exemplary embodiment, the left lateral surface portion 36, the right lateral surface portion 37 and the coupling portion 38, forming the opening portion 330, may be an integrated portion, or alternatively, separated portions.

### Industrial Applicability

According to the present teaching, it is possible to provide a saddle-ride type vehicle whereby attachment of mud and water to a head light unit can be inhibited.

### Reference Signs List

- 1: Saddle-ride type vehicle
- 21: Head pipe portion
- 33: Front cover portion
- 34: Head light unit
- 51a: First lens portion
- 51b: Second lens portion
- 51c: Third lens portion
- 61: First light source portion
- 62: Second light source portion
- 63: Third light source portion
- 65: Second reflector portion
- 66: Third reflector portion
- 67: First reflector portion
- 68: Left-side reflection surface
- 69: Right-side reflection surface
- 331: Cover upper edge portion
- 332: Cover lower edge portion
- 333: Upper protruding section
- 334: Lower protruding section
- 335: Left slope surface
- 336: Right slope surface
- 339: Cover front edge section

## Claims

1. A saddle-ride type vehicle, comprising:
a head pipe portion (21);
a front cover portion (33) disposed in front of the head pipe portion (21), the front cover portion (33) formed for positioning a lower portion thereof further forward than an upper portion thereof; and
a head light unit (34) disposed in a lower portion of the front cover portion (33),
wherein the head light unit (34) includes: a first light source portion (61); a first reflector portion (67) adapted for forwardly reflecting light from the first light source portion (61); a lens member (51) that includes a first lens portion (51 a) disposed in front of the first reflector portion (67); a second lens portion (51 b) continued to the first lens portion (51 a) on the left side of the first lens portion (51 a), the second lens portion (51 b) disposed for extending to a position located rearwards of at least a portion of the first reflector portion (67); and a third lens portion (51 c) continued to the first lens portion (51 a) on the right side of the first lens portion (51 a), the third lens portion (51 c) disposed for extending to a position located rearwards of at least a portion of the first reflector portion (67),
the front cover portion (33) includes an opening portion (330) formed for exposing the lens member (51) of the head light unit (34) therethrough,
the front cover portion (33) includes: a cover upper edge portion (331) disposed over the first lens portion (51 a), the second lens portion (51 b) and the third lens portion (51 c) in a vehicle front view; and a cover lower edge portion (332) disposed under the first lens portion (51 a), the second lens portion (51 b) and the third lens portion (51 c) in the vehicle front view,
the cover upper edge portion (331) and the cover lower edge portion (332) form the opening portion (330), and
the cover lower edge portion (332) includes a lower protruding section (334) protruded further forwards than the first lens portion (51 a), **characterized in that**
the cover upper edge portion (331) includes an upper protruding section (333) protruded further forwards than the first lens portion (51 a).

2. A saddle-ride type vehicle according to claim 1, **characterized in that** each of the upper protruding section (333) and the lower protruding section (334) includes a shape slanted forwardly downwards.

3. A saddle-ride type vehicle according to claim 1 or 2, **characterized in that** the lower protruding section (334) is extended to a position located forwards of the upper protruding section (333).

4. A saddle-ride type vehicle according to one of the claims 1 to 3, **characterized in that** the front cover portion (33) further includes a cover front edge section (339) extended obliquely downwards and rearwards from a front end of the lower protruding section (334) in a side view.

5. A saddle-ride type vehicle according one of the claims 1 to 4, **characterized in that** the cover upper edge portion (331) is outwardly protruded from upper edge portions of the first, second and third lens portions (51a,51b,51c).

6. A saddle-ride type vehicle according one of the claims 1 to 5, **characterized in that** upper edge portions of the first, second and third lens portions (51 a,51 b,51 c) are positioned further inwards in the front cover portion (33) than the cover upper edge portion (331).

7. A saddle-ride type vehicle according one of the claims 1 to 6, **characterized in that** the cover lower edge portion (332) is outwardly protruded from lower edge portions of the first, second and third lens portions (51a,51b,51c).

8. A saddle-ride type vehicle according one of the claims 1 to 7, **characterized in that** lower edge portions of the first, second and third lens portions (51a,51b,51c) are positioned further inwards in the front cover portion (33) than the cover lower edge portion (332).

9. A saddle-ride type vehicle according one of the claims 1 to 8, wherein the cover lower edge portion (332) further includes: a left slope surface (335) positioned on the left side of the lower protruding section (334), the left slope surface (335) slanted forwardly downwards; and a right slope surface (336) positioned on the right side of the lower protruding section (334), the right slope surface (336) slanted forwardly downwards, and each of the left slope surface (335) and the right slope surface (336) includes a recess (337, 338) dented downwards.

10. A saddle-ride type vehicle according one of the claims 1 to 9, wherein the second lens portion (51 b) is disposed for extending to a position located rearwards of and higher than at least a portion of the first reflector portion (67), and
the third lens portion (51 c) is disposed for extending to a position located rearwards of and higher than at least a portion of the first reflector portion (67).

11. A saddle-ride type vehicle according one of the claims 1 to 10, wherein the head light unit (34) includes: a second light source portion (62) disposed behind the second lens portion (51 b); a second reflector portion (65) adapted for forwardly reflecting light from the second light source portion (62); a third light source portion (63) disposed behind the third lens portion (51 c); and a third reflector portion (66) adapted for forwardly reflecting light from the third light source portion (63).

12. A saddle-ride type vehicle according to claim 11, wherein the second light source portion (62) and the third light source portion (63) are disposed lower than an upper end of the first lens portion (51 a).

13. A saddle-ride type vehicle according to claim 11 or 12, wherein the second reflector portion (65) includes a left-side reflection surface (68) disposed on the left side of the second light source portion (62),
the left-side reflection surface (68) is extended leftwards and rearwards,
the third reflector portion (66) includes a right-side reflection surface (69) disposed on the right side of the third light source portion (63),
the right-side reflection surface (69) is extended rightwards and rearwards.

14. A saddle-ride type vehicle according one of the claims 1 to 13, wherein the lens member including the first lens portion (51 a), the second lens portion (51 b) and the third lens portion (51 c) is invisible while being hidden behind the front cover portion (33) in a plan view.

15. A saddle-ride type vehicle according one of the claims 1 to14, wherein the cover upper edge portion (331) includes a forwardly convex curved shape in a plan view.

16. A saddle-ride type vehicle according one of the claims 1 to 15, wherein the lens member including the first lens portion (51 a), the second lens portion (51 b) and the third lens portion (51 c) includes a forwardly convex curved shape in a plan view.

## Patentansprüche

1. Ein Sattel-Reit-Typ-Fahrzeug mit:
einem Kopf-Rohr-Teil (21);
einem vorderen Abdeckungs-Teil (33), angeordnet vor dem Kopf-Rohr-Teil (21), das vordere Abdeckungs-Teil (33) ist zum Positionieren eines unteren Teils desselben weiter vorne als ein oberse Teil desselben ausgebildet; und
einer Scheinwerfer-Einheit (34), angeordnet an einem unteren Teil des vorderen Abdeckungs-Teils (33),
wobei die Scheinwerfer-Einheit (34) beinhaltet: einen ersten Licht-Quellen-Teil (61);
einen ersten Reflektor-Teil (67), angepasst, um Licht von dem ersten Licht-Quellen-Teil (61) nach vorne zur reflektieren; ein Licht-Scheiben-Element (51), welches einen ersten Licht-Scheiben-Teil (61 a) beinhaltet, positioniert vor dem ersten Reflektor-Teil (67); einen zweiten Licht-Scheiben-Teil (51 b), fortgesetzt zu dem ersten Licht-Scheiben-Teil (51 a) an der linken Seite des ersten Licht-Scheiben-Teils (51 a), beinhaltet, der zweite Licht-Scheiben-Teil (51 b) ist positioniert, sich zu einer Position, angeordnet hinter zumindest einem Teil des ersten Reflektor-Teils (67) zu erstrecken; und einen dritten Licht-Scheiben-Teil (51c), fortgesetzt zu dem ersten Licht-Scheiben-Teil (51 a) an der rechten Seite des ersten Licht-Scheiben-Teils (51 a), beinhaltet, der dritte Licht-Scheiben-Teil (51c) ist positioniert, sich zu einer Position, angeordnet hinter zumindest einem Teil des ersten Reflektor-Teils (67) zu erstrecken,
der erste Abdeckungs-Teil (33) beinhaltet einen Öffnungs-Teil (330), ausgebildet um das Licht-Scheiben-Element (51) der Scheinwerfer-Einheit (34) dadurch freizulegen, der erste Abdeckungs-Teil (33) beinhaltet: einen Abdeckungs-Oberkanten-Teil (331), angeordnet über dem ersten Licht-Scheiben-Teil (51 a), dem zweiten Licht-Scheiben-Teil (51 b) und dem dritten Licht-Scheiben-Teil (51 c) in einer Fahrzeug-Vorder-Ansicht; und einen Adeckungs-Unterkanten-Teil (323) angeordnet unter dem ersten Licht-Scheiben-Teil (51 a), dem zweiten Licht-Scheiben-Teil (51 b) und dem dritten Licht-Scheiben-Teil (51 c) in der Fahrzeug-Vorder-Ansicht,
der Abdeckungs-Oberkanten-Teil (331) und der Abdeckungs-Unterkanten-Teil (323) bilden den Öffnungs-Teil (330), und
der Abdeckungs-Unterkanten-Teil (332) beinhaltet einen unteren Vorsprungs-Abschnitt (334) der weiter nach vorne als der erste Licht-Scheiben-Teil (51 a) vorsteht,
**dadurch gekennzeichnet, dass** der Abdeckungs-Oberkanten-Teil (331) einen oberen Vorsprungs-Abschnitt (333) beinhaltet, der weiter nach vorne als der erste Licht-Scheiben-Teil (51 a) vorsteht.

2. Ein Sattel-Reit-Typ-Fahrzeugt gemäß Anspruch 1, **dadurch gekennzeichnet, dass** jeder von dem oberen Vorsprungs-Abschnitt (333) und dem unteren Vorsprungs-Abschnitt (334) eine Form geneigt nach vorne unten beinhaltet.

3. Ein Sattel-Reit-Typ-Fahrzeug gemäß Anspruch 1 oder 2, **dadurch gekennzeichnet, dass** der untere Vorsprungs-Abschnitt (334) sich zu einer Position, angeordnet vor dem oberen Vorsprungs-Abschnitt (333) erstreckt.

4. Ein Sattel-Reit-Typ-Fahrzeug gemäß einem der Ansprüche 1 bis 3, **dadurch gekennzeichnet, dass** der vordere Abdeckungs-Teil (33) weiterhin einen Abdeckungs-Vorderkanten-Abschnitt (339) beinhaltet, der sich schräg nach unten und hinten von einem Vorder-Ende des unteren Vorsprungs-Abschnitt (334) in einer Seiten-Ansicht erstreckt.

5. Ein Sattel-Reit-Typ-Fahrzeug gemäß einem der Ansprüche 1 bis 4, **dadurch gekennzeichnet, dass** der Abdeckungs-Oberkanten-Teil (331) nach außen von den Oberkanten-Teilen der ersten, zweiten und dritten Licht-Scheiben-Teilen (51 a, 51 b, 51 c) vorsteht.

6. Ein Sattel-Reit-Typ-Fahrzeug gemäß einem der Ansprüche 1 bis 5, **dadurch gekennzeichnet, dass** Oberkanten-Teile der ersten, zweiten und dritten Licht-Scheiben-Teile (51 a, 51 b, 51c) in dem vorderen Abdeckungs-Teil (33) weiter innen positioniert sind als der Abdeckungs-Oberkanten-Teil (331).

7. Ein Sattel-Reit-Typ-Fahrzeug gemäß einem der Ansprüche 1 bis 6, **dadurch gekennzeichnet, dass** der Adeckungs-Unterkanten-Teil (332) von Unterkanten-Teilen der ersten, zweiten und dritten Licht-Scheiben-Teile (51 a, 51 b, 51 c) nach außen vorsteht.

8. Ein Sattel-Reit-Typ-Fahrzeug gemäß einem der Ansprüche 1 bis 7, **dadurch gekennzeichnet, dass** Unterkanten-Teile der ersten, zweiten und dritten Licht-Scheiben-Teilen (51 a, 51 b, 51c) in dem vorderen Abdeckungs-Teil (33) weiter innen positioniert sind als der Abdeckungs-Unterkanten-Teil (332).

9. Ein Sattel-Reit-Typ-Fahrzeug gemäß einem der Ansprüche 1 bis 8, wobei der Adeckungs-Unterkanten-Teil (332) weiterhin beinhaltet: eine linke geneigte Fläche (335), positioniert an der linken Seite des unteren Vorsprungs-Abschnitts (334), die linke geneigte Fläche (335) ist nach vorne unten geneigt; und eine rechte geneigte Fläche (336), positioniert an der rechten Seite des unteren Vorsprungs-Abschnitts (334), die rechte geneigte Fläche (336) ist nach vorne unten geneigt, und jede der linken geneigten Fläche (335) und der rechten geneigten Fläche (336) beinhaltet eine Ausnehmung (337, 338), die nach unten ausgenommen ist.

10. Ein Sattel-Reit-Typ-Fahrzeug gemäß einem der Ansprüche 1 bis 9, wobei der zweite Licht-Scheiben-Teil (51 b) positioniert ist, sich zu einer Position zu erstrecken, die hinter und höher als zumindest ein Teil des ersten Reflektor-Teils (67) angeordnet ist, und der dritte Licht-Scheiben-Teil (51 c) ist positioniert, sich zu einer Position zu erstrecken, die hinter und höher als zumindest ein Teil des ersten Reflektor-Teils (67) angeordnet ist.

11. Ein Sattel-Reit-Typ-Fahrzeug gemäß einem der Ansprüche 1 bis 10, wobei die Scheinwerfer-Einheit (34) beinhaltet: einen zweiten Licht-Quellen-Teil (62), positioniert hinter dem ersten Licht-Scheiben-Teil (51 b); einen zweiten Reflektor-Teil (65), ausgebildet um Licht von dem zweiten Licht-Quellen-Teil (62) nach vorne zu reflektieren; einen dritten Licht-Quellen-Teil (63), positioniert hinter dem dritten Licht-Scheiben-Teil (51 c); und einen dritten Reflektor-Teil (66), ausgebildet um Licht von dem dritten Licht-Quellen-Teil (63) nach vorne zu reflektieren.

12. Ein Sattel-Reit-Typ-Fahrzeug gemäß Anspruch 11, wobei der zweite Licht-Quellen-Teil (62) und der dritte Licht-Quellen-Teil (63) niedriger als ein oberes Ende des ersten Licht-Scheiben-Teils (51 a) positioniert sind.

13. Ein Sattel-Reit-Typ-Fahrzeug gemäß Anspruch 11 oder 12, wobei der zweite Reflektor-Teil (65) eine Links-Seiten-Reflektionsfläche (68) beinhaltet, die an der linken Seite des zweiten Licht-Quellen-Teils (62) positioniert ist,
die Links-Seiten-Reflektionsfläche (68) erstreckt sich nach links und hinten,
der dritte Reflektor-Teil (66) beinhaltet eine Rechts-Seiten-Reflektionsfläche (69), die an der rechten Seite des dritten Licht-Quellen-Teils (63) positioniert ist,
die Rechts-Seiten-Reflektionsfläche (69) erstreckt sich nach rechts und hinten.

14. Ein Sattel-Reit-Typ-Fahrzeug gemäß einem der Ansprüche 1 bis 13, wobei das Licht-Scheiben-Element, welches den ersten Licht-Scheiben-Teil (51a), den zweiten Licht-Scheiben-Teil (51 b) und den dritten Licht-Scheiben-Teil (51 c) beinhaltet, unsichtbar ist, da es hinter dem vorderen Abdeckungs-Teil (33) in einer Draufsicht versteckt ist.

15. Ein Sattel-Reit-Typ-Fahrzeug gemäß einem der Ansprüche 1 bis 14, wobei der Abdeckungs-Oberkanten-Teil (331) eine nach vorn-konvex-gekrümmte Form in einer Draufsicht beinhaltet.

16. Ein Sattel-Reit-Typ-Fahrzeug gemäß einem der Ansprüche 1 bis 15, wobei das Licht-Scheiben-Element, welches den ersten Licht-Scheiben-Teil (51a), den zweiten Licht-Scheiben-Teil (51b) und den dritten Licht-Scheiben-Teil (51c) beinhaltet, eine nach vorn-konvex-gekrümmte Form in einer Draufsicht beinhaltet.

## Revendications

1. Véhicule de type à selle, comprenant :
une partie de tube de tête (21) ;
une partie de carénage avant (33) agencée devant la partie de tube de tête (21), la partie de carénage avant (33) étant formée pour positionner une partie inférieure de celui-ci plus loin en avant qu'une partie supérieure de celui-ci ; et
une unité d'éclairage de tête (34) agencée dans une partie inférieure de la partie de carénage avant (33),
dans lequel l'unité d'éclairage de tête (34) comprend : une première partie de source d'éclairage (61) ; une première partie de réflecteur (67) adaptée pour réfléchir vers l'avant de la lumière provenant de la première partie de source d'éclairage (61) ; un élément de lentille (51) qui comprend une première partie de lentille (51a) agencée devant la première partie de réflecteur (67) ; une deuxième partie de lentille (51b) contiguë à la première partie de lentille (51a) sur le côté gauche de la première partie de lentille (51a), la deuxième partie de lentille (51b) étant agencée pour s'étendre jusqu'à une position située à l'arrière d'au moins une partie de la première partie de réflecteur (67) ; et une troisième partie de lentille (51c) contiguë à la première partie de lentille (51a) sur le côté droit de la première partie de lentille (51a), la troisième partie de lentille (51c) étant agencée pour s'étendre jusqu'à une position située à l'arrière d'au moins une partie de la première partie de réflecteur (67),
la partie de carénage avant (33) comprend une partie d'ouverture (330) formée pour exposer à travers celle-ci l'élément de lentille (51) de l'unité d'éclairage de tête (34),
la partie de carénage avant (33) comprend : une partie de bord supérieur du carénage (331) agencée pardessus la première partie de lentille (51a), la deuxième partie de lentille (51b) et la troisième partie de lentille (51c) dans une vue de face du véhicule ; et une partie de bord inférieur du carénage (332) agencée sous la première partie de lentille (51a), la deuxième partie de lentille (51b) et la troisième partie de lentille (51c) dans la vue de face du véhicule,
la partie de bord supérieur du carénage (331) et la partie de bord inférieur du carénage (332) forment la partie d'ouverture (330), et
la partie de bord inférieur du carénage (332) comprend une section saillante inférieure (334) qui fait saillie plus loin vers l'avant que la première partie de lentille (51a), **caractérisé en ce que**
la partie de bord supérieur du carénage (331) comprend une section saillante supérieure (333) qui fait saillie plus loin vers l'avant que la première partie de lentille (51a).

2. Véhicule de type à selle selon la revendication 1, **caractérisé en ce que** chaque section parmi la section saillante supérieure (333) et la section saillante inférieure (334) présente une forme inclinée vers l'avant et vers le bas.

3. Véhicule de type à selle selon la revendication 1 ou 2, **caractérisé en ce que** la section saillante inférieure (334) s'étend jusqu'à une position située vers l'avant de la section saillante supérieure (333).

4. Véhicule de type à selle selon l'une des revendications 1 à 3, **caractérisé en ce que** la partie de carénage avant (33) comprend en outre une section de bord avant de carénage (339) qui s'étend en oblique vers le bas et vers l'arrière depuis une extrémité avant de la section saillante inférieure (334) en vue de côté.

5. Véhicule de type à selle selon l'une des revendications 1 à 4, **caractérisé en ce que** la partie de bord supérieur du carénage (331) fait saillie vers l'extérieur depuis des parties de bord supérieur des première, deuxième et troisième parties de lentille (51a, 51b, 51c).

6. Véhicule de type à selle selon l'une des revendications 1 à 5, **caractérisé en ce que** des parties de bord supérieur des première, deuxième et troisième parties de lentille (51a, 51b, 51c) sont positionnées plus loin vers l'intérieur dans la partie de carénage avant (33) que la partie de bord supérieur du carénage (331).

7. Véhicule de type à selle selon l'une des revendications 1 à 6, **caractérisé en ce que** la partie de bord inférieur du carénage (332) fait saillie vers l'extérieur depuis des parties de bord inférieur des première, deuxième et troisième parties de lentille (51a, 51b, 51c).

8. Véhicule de type à selle selon l'une des revendications 1 à 7, **caractérisé en ce que** des parties de bord inférieur des première, deuxième et troisième parties de lentille (51a, 51b, 51c) sont positionnées plus loin vers l'intérieur dans la partie de carénage avant (33) que la partie de bord inférieur du carénage (332).

9. Véhicule de type à selle selon l'une des revendications 1 à 8, dans lequel la partie de bord inférieur du carénage (332) comprend en outre : une surface de flanc gauche (335) positionnée sur le côté gauche de la section saillante inférieure (334), la surface de flanc gauche (335) étant inclinée vers l'avant et vers le bas ; et une surface de flanc droit (336) positionnée sur le côté droit de la section saillante inférieure (334), la surface de flanc droit (336) étant inclinée vers l'avant et vers le bas, et chacune des surfaces parmi la surface de flanc gauche (335) et la surface de flanc droit (336) comprend un renfoncement (337, 338) indenté vers le bas.

10. Véhicule de type à selle selon l'une des revendications 1 à 9, dans lequel
la deuxième partie de lentille (51b) est agencée pour s'étendre jusqu'à une position située plus à l'arrière et plus haut qu'au moins une partie de la première partie de réflecteur (67), et
la troisième partie de lentille (51c) est agencée pour s'étendre jusqu'à une position située plus à l'arrière et plus haut qu'au moins une partie de la première partie de réflecteur (67).

11. Véhicule de type à selle selon l'une des revendications 1 à 10, dans lequel l'unité d'éclairage de tête (34) comprend : une deuxième partie de source d'éclairage (62) agencée derrière la deuxième partie de lentille (51b) ; une deuxième partie de réflecteur (65) adaptée pour réfléchir vers l'avant de la lumière provenant de la deuxième partie de source d'éclairage (62) ; une troisième partie de source d'éclairage (63) agencée derrière la troisième partie de lentille (51c) ; et une troisième partie de réflecteur (66) adaptée pour réfléchir vers l'avant de la lumière provenant de la troisième partie de source d'éclairage (63).

12. Véhicule de type à selle selon la revendication 11, dans lequel la deuxième partie de source d'éclairage (62) et la troisième partie de source d'éclairage (63) sont agencées plus bas qu'une extrémité supérieure de la première partie de lentille (51a).

13. Véhicule de type à selle selon la revendication 11 ou 12, dans lequel
la deuxième partie de réflecteur (65) comprend une surface de réflexion du côté gauche (68) agencée sur le côté gauche de la deuxième partie de source d'éclairage (62),
la surface de réflexion du côté gauche (68) s'étend vers la gauche et vers l'arrière,
la troisième partie de réflecteur (66) comprend une surface de réflexion du côté droit (69) agencée sur le côté droit de la troisième partie de source d'éclairage (63),
la surface de réflexion du côté droit (69) s'étend vers la droite et vers l'arrière.

14. Véhicule de type à selle selon l'une des revendications 1 à 13, dans lequel l'élément de lentille comprenant la première partie de lentille (51a), la deuxième partie de lentille (51b) et la troisième partie de lentille (51c) est invisible lorsqu'il est caché derrière la partie de carénage avant (33) en vue en plan.

15. Véhicule de type à selle selon l'une des revendications 1 à 14, dans lequel la partie de bord supérieur du carénage (331) comprend une forme incurvée convexe vers l'avant en vue en plan.

16. Véhicule de type à selle selon l'une des revendications 1 à 15, dans lequel l'élément de lentille comprenant la première partie de lentille (51a), la deuxième partie de lentille (51b) et la troisième partie de lentille (51c) comprend une forme incurvée convexe vers l'avant en vue en plan.
